# EUROPEAN PATENT APPLICATION

(11) **EP 0 779 177 A2**
(43) Date of publication of application: **18.06.1997**
(21) Application number: 96203402.1
(22) Date of filing: 03.12.1996
(51) Int. Cl.: B60N 2/44

(54) **Seat provided with a protective backrest cover**

(30) Priority: 12.12.1995 NL 1001875
(71) Applicant: Basic Market, Product & Production Development B.V., 1075 HW Amsterdam (NL)
(72) Inventor: van der Steen, Dirk, 2322 Minderhout (BE)
(74) Representative: de Bruijn, Leendert C.

(57) **Abstract**

The invention relates to a backrest provided with a protective cover. The fastening means of the cover and the backrest are placed in such a way that the cover extends over at least part of the rear face of the backrest, in the region of the top edge thereof. This produces a display face which can be looked at by a passenger sitting behind the seat. The display area can be integral with the material of the cover in the main area thereof, but it can also be made of a different material. The display area can be permanently connected to the main area, or can be detachable through the use of, for example, a weakening line or a perforation.

## Description

The invention relates to a seat provided with a backrest which has a top edge, a front face with a main area adjoining the top edge, a rear face and a protective cover which is placed in the main area and is in the form of a virtually flat strip with a front edge and a rear edge, the backrest in the region of the top edge being provided with first fastening means, while the cover is provided with second fastening means which interact detachably with the first fastening means.

The invention also relates to a cover for use with such a seat.

It is known for seats, for example in aircraft or trains, to be provided with a replaceable, protective cover in the main area of the backrest. Said cover can be in the form of a fabric or paper strip with a rear edge and fastening means placed along said edge. These fastening means are generally in the form of a Velcro material, the top edge of the backrest having a band of flexible hooks, and the cover having along its rear edge a band of loops which interact with the hooks. When the main cover has become soiled through contact with passengers' hair, or when it is otherwise crumpled or creased, it can be removed from the backrest and replaced by a new cover.

The known covers are generally made in a plain colour, or they can be provided with a pattern corresponding to the logo of the airline or railway company using these covers. However, when a passenger has sat down on the seat which has the cover, this protective cover cannot be seen.

One object is therefore to provide a protective cover for a backrest which can also be seen when a passenger has sat down on the seat which has the cover. Another object of the present invention is to provide a protective cover by means of which messages can advantageously be communicated to passengers. Finally, it is a further object of the invention to provide a protective cover from which parts are simple to remove.

To this end, a seat according to the present invention is characterized in that the first and the second fastening means are fitted in such a way that when the cover is fastened to the backrest it also extends over at least part of the rear face of the backrest in the region of the top edge, while the part of the cover situated between the rear edge of the cover and the top edge of the backrest forms a display face.

Due to the fact that the protective cover also extends over the rear face of the backrest, a passenger seated behind the seat can look at the display area of the cover undisturbed. The display area can contain, for example, the logo of the carrier company, advertising texts, special offers of the carrier company, flight schedules, a menu card and the like.

According to a first embodiment, the fastening means of the cover can be fastened along the rear edge thereof. The fastening means of the backrest are in this case fastened to the rear face of the backrest, and not to the top side, as is customary. In this case the space between the fastening means on the backrest and the top edge thereof becomes available as a display face.

According to another embodiment, the fastening means on the backrest of the seat can be situated along the top edge, or can extend in the main area and along the front face of the seat. The fastening means of the cover are in this case placed at a distance from the rear edge of the cover. This means that the display face is formed between the fastening means of the cover and the rear edge thereof.

In this case, in an advantageous embodiment a weakened part is incorporated below the fastening means of the cover, along which the display area can be torn off. This means that passengers can take away a part of the cover, in which case said part can comprise, for example, a questionnaire or another form which can be completed and returned to the carrier company. It can also be a system where a certain discount or a certain gift can be obtained on surrender of a part of the cover.

The distance between the rear edge of the cover and the top edge of the backrest is preferably between 2 and 20 centimetres, which corresponds to the height of the display face. The display face can be in the form of an integral part of the cover, but it can also be made of a different material from that of the cover. In this case the cover can be made of a non-woven material, and the display face can be made of, for example, paper.

The invention will be explained in greater detail with reference to the appended drawing, in which:
Figure 1 shows a perspective view of an aircraft seat;
Figure 2 shows a partial side view of a top part of a backrest, where the fastening means of the backrest have been placed on the rear face;
Figure 3 shows a partial side view of a backrest, where the fastening means of the backrest have been fastened along the top edge; and
Figure 4 shows a partial side view of a backrest, where the fastening means thereof have been fastened to the front face of the backrest.

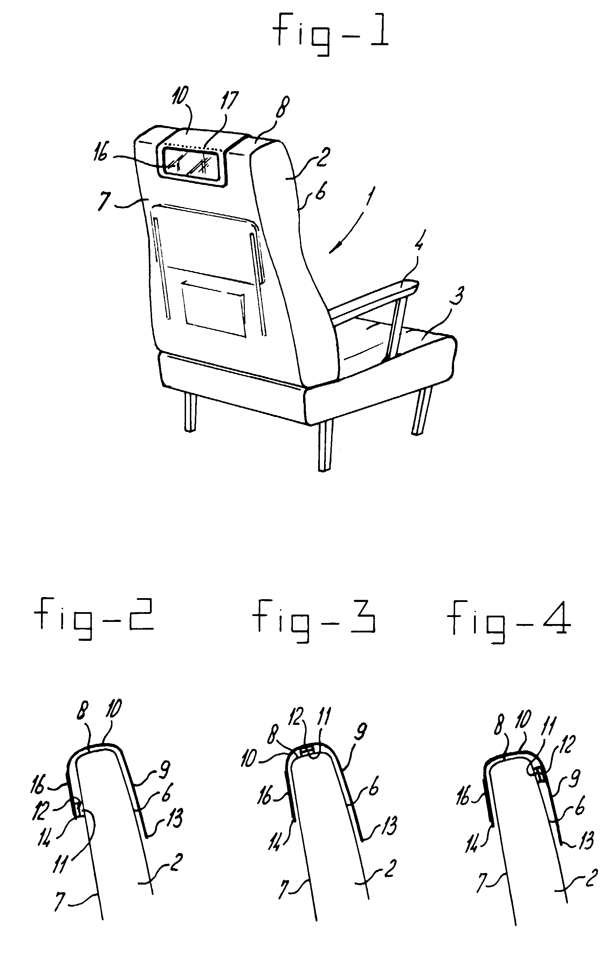

Figure 1 shows an aircraft seat 1 with a backrest 2, a sitting face 3 and armrests 4. The backrest 2 comprises a rear face 7, a front face 6 situated opposite the rear face, and a top edge of the backrest 2. A protective cover 10 has been placed over the top edge 8. The cover 10 extends in this case over part of the width of the backrest 2 and covers a main area on the front face thereof. On the rear face 7 of the backrest 2 the cover 10 forms a display area 16. The display area 16 can contain, for example, a text or another visual pattern. The cover 10 is detachably fastened to the backrest 2 by fastening means such as, for example, a Velcro strip, a pressure-sensitive adhesive layer or other means. In the main area, the cover 10 is provided with a perforation 17, along which it can be torn off. The cover 10 still remains fastened to the backrest 2.

Figure 2 shows an embodiment in which the fastening means 11 of the backrest 2 are fastened to the rear face 7. The fastening means 12 of the cover 10 are situated along the rear edge 14 of the cover. In this case the front edge 13 of the cover has been passed over the backrest and is situated in the front face 6 of the backrest. The main area 9 in this case extends between the front edge 13 and the top edge 8 of the backrest 2. The display area 16 extends between the rear edge 14 and the top edge 8 of the backrest.

According to the embodiment of Figure 3, the fastening means 11 of the backrest are fastened along the top edge 8 thereof. The fastening means 12 of the cover 10 are placed at a distance from the bottom edge 14. The display area in this case extends between the bottom edge 14 and the fastening means 12. A weakened part can be provided in the material of the cover 10, between the bottom edge 14 and the fastening means 12, for example a perforation or a partial incision. The material of the cover 10 in the main area 9 can also differ from the material in the display area 16. The dividing line between the materials can be situated at the position of the fastening means 12.

In the embodiment according to Figure 4, the fastening means 11 of the backrest are situated in the front face 6. The fastening means 12 of the cover 10 are situated at a distance from the rear edge 14. According to this embodiment, a relatively large display area 16 is obtained, extending over the top of the backrest 2. The cover 10 can be designed as a single flat strip of, for example, a non-woven material, a paper or a plastic film. However, the cover 10 can also be made of different materials, the material of the cover 10 in the main area 9 differing from the material in the display area 16. In this case the material in the main area 9 can comprise, for example, a non-woven material, while the material in the display area 16 is made of paper. The display area 16 can be connected to the main area 9 by means of adhesive, or by mechanical fastening means such as, for example, hooks and eyes, and the like.

Instead of a single strip of material, the display area 16 can also be in the form of a multilayer construction for containing several texts. If the display area 16 is removable from the main area 9 of the cover 10, the use of several layers in the display area 16 means that the cover can be used for several passengers.

## Claims

1. Seat (1) provided with a backrest (2) which has a top edge (8), a front face (16) with a main area (9) adjoining the top edge, a rear face (7) and a protective cover (10) which is placed in the main area and is in the form of a virtually flat strip with a front edge (13) and a rear edge (14), the backrest in the region of the top edge (8) being provided with first fastening means (11), while the cover (10) is provided with second fastening means (12) which interact detachably with the first fastening means (11), characterized in that the first (11) and the second fastening means (12) are fitted in such a way that when the cover (10) is fastened to the backrest (2) it also extends over at least part of the rear face (7) in the region of the top edge (8), while the part of the cover situated between the rear edge (14) of the cover and the top edge (8) of the backrest forms a display face.

2. Seat (2) according to Claim 1, in which the second fastening means (12) are fastened along the rear edge (14) of the cover (10), characterized in that the first fastening means (11) are fastened to the rear face (7) of the backrest (2), while the display face is situated between the rear edge (14) of the cover (10) and the top edge (8) of the backrest (2).

3. Seat according to Claim 1, in which the cover (10) has a front edge (13) and a rear edge (14), characterized in that the first fastening means (11) extend along the top edge (8) or in the main area (9), while the second fastening means (12) of the cover (10) extend at a distance from the rear edge (14), and the display face is situated between the rear edge (14) of the cover (10) and the second fastening means (12) thereof.

4. Seat according to Claim 3, characterized in that between the second fastening means (12) of the cover (10) and the rear edge (14) a weakened part (17) is formed in the material of the cover (10), along which the latter can be torn off.

5. Seat according to one of the preceding claims, characterized in that the distance between the rear edge (14) of the cover and the top edge (8) of the backrest (2) is between 2 and 20 cm.

6. Seat according to one of the preceding claims, characterized in that the cover (10) is provided with a visual pattern such as a text on the display face.

7. Seat according to one of the preceding claims, characterized in that the cover (10) is made of a first material, while in the display face the cover is made of a material which is different from the first material.

8. Cover for use in a seat according to one of the preceding claims, characterized in that the cover is provided with a rear edge (14) and a display face situated in the region of the rear edge.

9. Cover according to Claim 8, characterized in that the cover is provided with fastening means (12) which are situated at a distance from the rear edge (14), while the display face extends between the rear edge (14) and the fastening means (12).

10. Cover (10) according to Claim 9, characterized in that between the fastening means (12) of the cover and the rear edge (14) the cover has a weakened part (17) in the material of the cover, along which the latter can be torn off.

11. Cover (10) according to Claim 8, 9 or 10, in which the cover is made of a first material, characterized in that in the display face the cover is made of a material which differs from the first material.
